# EUROPEAN PATENT APPLICATION

(11) **EP 3 578 529 A1**
(43) Date of publication of application: **11.12.2019**
(21) Application number: 18747258.4
(22) Date of filing: 31.01.2018
(51) Int. Cl.: C03C 27/12, B32B 7/02, B32B 17/10, C09K 9/00, C09K 9/02, B60J 1/00

(54) **INTERMEDIATE FILM FOR LAMINATED GLASS HAVING THERMOCHROMIC PROPERTIES, LAMINATED GLASS, AND LAMINATED GLASS SYSTEM**

(30) Priority: 31.01.2017 JP 2017015989
(71) Applicant: Sekisui Chemical Co., Ltd., Osaka-shi, Osaka 530-0047 (JP)
(72) Inventor: SHOUHI, Hajime, Koka-shi Shiga 528-8585 (JP); YAMAMOTO, Masaki, Koka-shi Shiga 528-8585 (JP); NOHARA, Atsushi, Koka-shi Shiga 528-8585 (JP)
(74) Representative: Cabinet Beau de Loménie
(86) International application number: PCT/JP2018/003223
(87) International publication number: WO 2018/143276

(57) **Abstract**

The present invention aims to provide a thermochromic interlayer film for a laminated glass capable of uniformly changing its color, a laminated glass produced using the thermochromic interlayer film for a laminated glass, and a laminated glass system including the laminated glass. Provided is a thermochromic interlayer film for a laminated glass including: a pyrogenic layer; and a thermochromic layer that contains a thermoplastic resin and a thermochromic substance, stacked on at least one surface of the pyrogenic layer.

## Description

### TECHNICAL FIELD

The present invention relates to a thermochromic interlayer film for a laminated glass capable of uniformly changing its color, a laminated glass produced using the thermochromic interlayer film for a laminated glass, and a laminated glass system including the laminated glass.

### BACKGROUND ART

Thermochromic substances having an optical transmittance that changes at a certain temperature or higher are known. For example, Patent Literature 1 discloses a reversible thermochromic microcapsule pigment that shows a reversible thermochromic behavior in which the color develops by heating and fades by a temperature decrease within a living temperature range. For another example, according to Patent Literature 2, a vanadium dioxide or a substituted vanadium dioxide in which vanadium atoms are partly substituted with other atoms undergoes the phase transition from a semiconductor to a metal at a certain temperature or higher to have an infrared transmittance significantly lowered.

In recent years, production of a thermochromic interlayer film for a laminated glass containing such a thermochromic substance has been attempted (For example, Patent Literature 3). A laminated glass including a thermochromic interlayer film for a laminated glass can change its color by a temperature change and therefore is expected to be widely applied as a decorative glass used in buildings or automobiles. However, conventional thermochromic interlayer films for a laminated glass have difficulty in changing its color uniformly.

### CITATION LIST

### - Patent Literature

Patent Literature 1: JP 2013-159706 A
Patent Literature 2: JP 2000-233929 A
Patent Literature 3: JP 2004-346260 A

### SUMMARY OF INVENTION

### - Technical Problem

The present invention aims to provide a thermochromic interlayer film for a laminated glass capable of changing its color uniformly, a laminated glass including the thermochromic interlayer film for a laminated glass, and a laminated glass system including the laminated glass.

### - Solution to problem

The present invention relates to a thermochromic interlayer film for a laminated glass including: a pyrogenic layer; and a thermochromic layer that contains a thermoplastic resin and a thermochromic substance, stacked on at least one surface of the pyrogenic layer.

The present invention is specifically described in the following.

The present inventors made intensive studies to find out that stacking of a pyrogenic layer that is a planar heating element on a thermochromic layer containing a thermochromic substance enables a uniform change of the color by application of a voltage to the pyrogenic layer. Thus, the present invention was completed.

The thermochromic interlayer film for a laminated glass of the present invention (hereafter, also simply referred to as an "interlayer film for a laminated glass of the present invention") has a pyrogenic layer and a thermochromic layer stacked on at least one surface of the pyrogenic layer.

The pyrogenic layer generates heat by application of a voltage and has a role as a planar heating element that heats the thermochromic layer to cause a color change.

The pyrogenic layer preferably has a surface resistivity of 10 Ω/□ or lower. The pyrogenic layer having a surface resistivity of 10 Ω/□ or lower can sufficiently generate heat by application of a voltage to enable a uniform color change. The surface resistivity is more preferably 2.5 Ω/□ or lower.

The pyrogenic layer has a single-layer or multiple-layer structure formed of a metal having a low electrical resistivity, such as gold, silver, copper, or platinum. The pyrogenic layer formed of such a metal having a low electrical resistivity can provide sufficient heat generation under application of a voltage. In particular, a pyrogenic layer formed of silver is favorable.

The metal having a low electrical resistivity as used herein refers to a metal or alloy having an electrical resistivity of 1 × 10⁻⁶ Ωm or lower. Here, examples of the metal or alloy having an electrical resistivity of 1 × 10⁻⁷ Ωm or higher and lower than 1 × 10⁻⁶ Ωm include platinum, iron, tin, chromium, lead, titanium, mercury, and stainless steel. Examples of the metal or alloy having an electrical resistivity of lower than 1 × 10⁻⁷ Ωm include gold, silver, copper, aluminum, magnesium, tungsten, cobalt, zinc, nickel, potassium, lithium, and brass.

The number of the pyrogenic layer (and the numbers of a transparent conductive layer or a metal oxide layer described later) in the interlayer film for a laminated glass of the present invention may be one or two or more.

The thickness of the pyrogenic layer is not particularly limited, and is preferably 15 nm or more. With the thickness of 15 nm or more, the pyrogenic layer can sufficiently generate heat by application of a voltage to cause a uniform color change. The thickness of the pyrogenic layer is more preferably 20 nm or more, still more preferably 25 nm or more.

The upper limit of the thickness of the pyrogenic layer is not particularly limited, and is practically around 1,000 nm.

The pyrogenic layer may have a transparent conductive layer or a metal oxide layer stacked on at least one surface thereof. The use of such a transparent conductive layer or a metal oxide layer can increase the transparency of an interlayer film for a laminated glass and a laminated glass to be obtained.

The transparent conductive layer is preferably formed of tin-doped indium oxide (ITO), fluorine-doped tin oxide (FTO), antimony-doped tin oxide (ATO), or the like for its transparency and low electrical resistivity.

Examples of the metal oxide layer include those formed of titanium oxide (TiO₂), niobium oxide (Nb₂O₅), silicon oxide (SiO₂), or the like.

These transparent conductive layer and metal oxide layer each may be used alone or in combination of two or more. Particularly preferred are a transparent conductive layer formed of ITO or ATO and a metal oxide layer formed of at least one selected from the group consisting of titanium oxide and niobium oxide.

The thickness of the transparent conductive layer or the metal oxide layer is not particularly limited. The lower limit thereof is preferably 20 nm and the upper limit thereof is preferably 300 nm. The lower limit of the thickness of the transparent conductive layer or the metal oxide layer is more preferably 25 nm and the upper limit thereof is more preferably 100 nm.

Preferably, the interlayer film for a laminated glass of the present invention has a pyrogenic layer containing, in particular, silver and a metal oxide layer containing titanium oxide (TiO₂), niobium oxide (Nb₂O₅), silicon oxide (SiO₂), or the like in combination. Such a combination of a pyrogenic layer and a metal oxide layer can particularly improve the transparency of the interlayer film for a laminated glass, enabling more beautiful expression of the color change by the thermochromic layer.

In the case of a combination of a pyrogenic layer containing silver and a metal oxide layer, formation of the metal oxide layer on the pyrogenic layer by a sputtering method or the like may cause partial oxidation of the silver at the surface of the pyrogenic layer to unintendedly form a layer of silver oxide having poor transparency. In such a case, an oxygen-deficient metal oxide layer containing an oxygen-deficient metal oxide is preferably provided between the pyrogenic layer and the metal oxide layer. The presence of such an oxygen-deficient metal oxide layer can prevent oxidation of the pyrogenic layer surface so that the pyrogenic layer can exhibit higher transparency.

The oxygen-deficient metal oxide layer can be formed, for example, by sputtering under the condition that the oxygen concentration is theoretically lower than that for the formation of a metal oxide layer, upon formation of the metal oxide layer by a sputtering method.

The pyrogenic layer may be formed on a substrate. In the case where the pyrogenic layer is formed on a substrate, a more uniform pyrogenic layer can be formed by the sputtering process or the like.

The substrate preferably has a thermal shrinkage measured in conformity with JIS C2151 after the heat treatment at 150°C for 30 minutes of 1.0% to 3.5% in both MD and TD. The use of a substrate having such a thermal shrinkage allows formation of a more uniform pyrogenic layer by the sputtering process or the like and also prevents misalignment between the pyrogenic layer and the thermochromic layer due to a difference in thermal shrinkage during the production of a laminated glass to improve the adhesiveness between the pyrogenic layer and the thermochromic layer. The lower limit of the thermal shrinkage is more preferably 1.5% and the upper limit thereof is more preferably 3.0%.

The MD (Machine Direction) as used herein refers to the extrusion direction in the extrusion processing of the substrate into a sheet shape, and the TD (Transverse Direction) refers to a direction perpendicular to MD.

The substrate preferably has a Young's modulus of 1 GPa or higher. The use of a substrate having a Young's modulus of 1 GPa or higher can further improve the adhesiveness to the thermochromic layer. The substrate has a Young's modulus of more preferably 1.5 GPa or higher, still more preferably 2 GPa or higher. The upper limit of the Young's modulus of the substrate is preferably 10 GPa.

The Young's modulus is indicated by the gradient of a straight part of a stress-strain curve obtained by a tensile test in conformity with JIS K7127 at 23°C.

Commonly, the Young's modulus of a thermochromic layer described later is preferably lower than 1 GPa.

The substrate preferably contains a thermoplastic resin.

Examples of the thermoplastic resin contained in the substrate include: chain polyolefins such as polyethylene, polypropylene, poly(4-methylpentene-1), and polyacetal; and alicyclic polyolefins such as ring-opening metathesis polymers or addition polymers of norbornenes and addition copolymers of norbornenes and other olefins. The examples also include biodegradable polymers such as polylactic acid and polybutyl succinate. The examples further include polyamides (e.g., nylon 6, nylon 11, nylon 12, nylon 66) and aramids. The examples further include polyesters such as polymethyl methacrylate, polyvinyl chloride, polyvinylidene chloride, polystyrene, styrene-copolymerized polymethyl methacrylate, polycarbonate, polypropylene terephthalate, polyethylene terephthalate, polyethylene naphthalate, polybutylene terephthalate, and polyethylene-2,6-naphthalate. The examples further include polyether sulfone, polyether ether ketone, modified polyphenylene ether, polyphenylene sulfide, polyether imide, and polyimide. The examples further include polyarylate, tetrafluoroethylene resin, trifluoroethylene resin, polychlorotrifluoroethylene resin, tetrafluoroethylene-hexafluoropropylene copolymers, and polyvinylidene fluoride. One or two or more of these thermoplastic resins are used to adjust the thermal shrinkage and the Young's modulus each within a predetermined range.

The substrate may optionally contain conventionally known additives such as a UV blocking agent or an antioxidant.

The UV blocking agent may be a conventionally known UV blocking agent such as a metal-containing UV blocking agent or a metal oxide-containing UV blocking agent. Moreover, the UV blocking agent may be a conventionally known UV blocking agent such as a UV blocking agent having a benzotriazole structure, a UV blocking agent having a benzophenone structure, a UV blocking agent having a triazine structure, a UV blocking agent having a malonate ester structure, a UV blocking agent having an oxanilide structure, or a UV blocking agent having a benzoate structure.

The antioxidant may be a conventionally known antioxidant such as an antioxidant having a phenolic structure, an antioxidant containing sulfur, or an antioxidant containing phosphor.

The thickness of the substrate is not particularly limited. The lower limit of the thickness is preferably 10 µm and the upper limit thereof is preferably 200 µm. With the thickness of the substrate within this range, a uniform pyrogenic layer can be formed by the sputtering process. In addition, misalignment between the pyrogenic layer and the surface of the thermochromic layer can be prevented during the production of a laminated glass so that the adhesiveness between the pyrogenic layer and the thermochromic layer can be further improved. The lower limit of the thickness of the substrate is more preferably 20 µm and the upper limit thereof is more preferably 150 µm.

The pyrogenic layer may be formed on the substrate by any method, and a conventionally known method can be employed, such as sputtering process, ion plating, plasma CVD process, vapor deposition process, application process, or dipping process. Among these, preferred is the sputtering process because a uniform pyrogenic layer can be formed.

In the case where the pyrogenic layer is formed on the substrate, the thermochromic layer directly in contact with the substrate and the substrate have an absolute difference in thermal shrinkage after the heat treatment at 150°C for 30 minutes of 10% or less in both MD and TD. Here, the thermal shrinkage is measured in conformity with JIS C2151. With the absolute difference in thermal shrinkage between the substrate and the thermochromic layer directly in contact with the substrate of 10% or less, misalignment between the thermochromic layer and the pyrogenic layer during the production of a laminated glass can be prevented to further improve the adhesiveness between the pyrogenic layer and the thermochromic layer. The absolute difference in thermal shrinkage between the thermochromic layer and the substrate is more preferably 8% or less.

The thermal shrinkage of the thermochromic layer can be adjusted by changing the type of the thermoplastic resin constituting the thermochromic layer, the type or amount of the plasticizer, or the annealing conditions.

The thermochromic layer has a role of changing the color of the interlayer film for a laminated glass in association with the heat generation by the pyrogenic layer or a temperature decrease by natural cooling after the heat generation.

The thermochromic layer contains a thermoplastic resin and a thermochromic substance.

Examples of the thermoplastic resin include polyvinylidene fluoride, polytetrafluoroethylene, vinylidene fluoride-propylene hexafluoride copolymers, and polyethylene trifluoride. The examples further include acrylonitrile-butadiene-styrene copolymers, polyester, polyether, polyamide, polycarbonate, polyacrylate, polymethacrylate, polyvinyl chloride, polyethylene, polypropylene, and polystyrene. The examples further include polyvinyl acetal, ethylene-vinyl acetate copolymers, polyoxymethylene (or polyacetal) resin, acetoacetal resin, polyvinyl benzyl acetal resin, and polyvinyl cuminacetal resin. In particular, the thermochromic layer contains preferably a polyvinyl acetal or an ethylene-vinyl acetate copolymer, more preferably a polyvinyl acetal.

The polyvinyl acetal may be any polyvinyl acetal obtained by acetalizing polyvinyl alcohol with an aldehyde, and is preferably polyvinyl butyral. If necessary, two or more types of polyvinyl acetals may be used in combination.

The lower limit of the degree of acetalization of the polyvinyl acetal is preferably 40 mol% and the upper limit thereof is preferably 85 mol%. The lower limit is more preferably 60 mol% and the upper limit is more preferably 75 mol%.

The lower limit of the hydroxy group content of the polyvinyl acetal is preferably 15 mol% and the upper limit thereof is preferably 35 mol%. With the hydroxy group content of 15 mol% or more, the adhesiveness between the interlayer film for a laminated glass and glass is improved. With the hydroxy group content of 35 mol% or less, the handleability of the interlayer film for a laminated glass is enhanced.

The degree of acetalization and the hydroxy group content can be measured, for example, in conformity with "Testing methods for polyvinyl butyral", JIS K6728.

The polyvinyl acetal can be prepared by acetalizing polyvinyl alcohol with an aldehyde.

The polyvinyl alcohol is commonly obtained by saponifying polyvinyl acetate, and polyvinyl alcohol having a degree of saponification of 70 to 99.8 mol% is commonly used. The degree of saponification of the polyvinyl alcohol is preferably 80 to 99.8 mol%.

The lower limit of the degree of polymerization of the polyvinyl alcohol is preferably 500 and the upper limit thereof is preferably 4,000. With the degree of polymerization of the polyvinyl alcohol of 500 or more, the resulting laminated glass has higher penetration resistance. With the degree of polymerization of the polyvinyl alcohol of 4,000 or less, molding of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, a C1-C10 aldehyde is favorably used.

The C1-C10 aldehyde is not particularly limited, and examples thereof include n-butyraldehyde and isobutyraldehyde. The examples further include n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, polyvinyl benzylaldehyde, and polyvinyl cuminaldehyde. In particular, preferred are n-butyraldehyde, n-hexylaldehyde, and n-valeraldehyde, and more preferred is n-butyraldehyde. These aldehydes may be used alone or in combination of two or more.

The thermochromic substance is not particularly limited, and a conventionally known thermochromic substance can be used. In particular, preferred is a dye or a pigment that repeats color development and fade by heating and cooling because the viewer can enjoy repetitive color changes. For a color change with a high response speed, a dye or a pigment that starts changing its color by heating at 20°C to 70°C is preferred.

Examples of the dye or pigment that repeats color development and fade by heating and cooling and the dye or pigment that starts changing its color by heating at 20°C to 70°C include vanadium dioxide and substituted vanadium dioxide obtained by partly substituting vanadium atoms in vanadium dioxide with other atoms. Examples of a commercially available dye or pigment that repeats color development and fade by heating and cooling include an orange thermochromic ink extracted from a FRIXION light highlighter ("SFL-10SL-0" available from Pilot Corporation). The examples also include a blue-black thermochromic ink extracted from a FRIXION BALL KNOCK ballpoint pen ("LFBK-23EF-BB" available from Pilot Corporation). The examples further include a green thermochromic ink extracted from a FRIXION BALL KNOCK ballpoint pen ("LFBK-23EF-BB" available from Pilot Corporation). The examples further include a yellow thermochromic ink extracted from a FRIXION light highlighter ("SFL-10SL-Y" available from Pilot Corporation).

As the dye or pigment that repeats color development and fade by heating and cooling or the dye or pigment that starts changing its color by heating at 20°C to 70°C, also preferred is a reversible thermochromic microcapsule pigment that shows a reversible thermochromic behavior in which the color develops by heating and fades by a temperature decrease within a living temperature range. Such a reversible thermochromic microcapsule pigment is disclosed in Patent Literature 1 (JP 2013-159706 A).

The reversible thermochromic microcapsule pigment disclosed in Patent Literature 1 includes the following four components (a) to (d). Addition of the reversible thermochromic microcapsule pigment to the thermochromic layer enables the color change with a high response speed.
(a) an electron donative colorational organic compound
(b) an electron acceptive compound (specific hydroxybenzoate compound)
(c) a reaction medium (reaction medium that reversibly induces an electron transfer reaction between the components (a) and (b))
(d) an additive (compound having a melting point of 50°C or higher selected from alcohols, esters, ethers, ketones, and acid amides)

The amount of the thermochromic substance in the thermochromic layer is not particularly limited, and is appropriately adjusted according to the type of the thermochromic substance used. For example, in the case where the thermochromic substance used is the reversible thermochromic microcapsule pigment disclosed in Patent Literature 1, the lower limit of the amount thereof relative to 100 parts by weight of the polyvinyl acetal is preferably 0.1 parts by weight and the upper limit thereof is preferably 10.0 parts by weight. With the amount of the reversible thermochromic microcapsule pigment within this range, a brilliant color change can be generated without lowering the transparency or the like of the interlayer film for a laminated glass.

The thermochromic layer preferably contains a plasticizer. The plasticizer is not particularly limited, and examples thereof include organic ester plasticizers such as monobasic organic acid esters and polybasic organic acid esters, and phosphoric acid plasticizers such as organophosphate plasticizers and organophosphite plasticizer. The plasticizer is preferably a liquid plasticizer.

The monobasic organic acid ester is not particularly limited, and examples thereof include glycol esters obtained by reaction between a glycol and a monobasic organic acid.

Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexyl acid, pelargonic acid (n-nonylic acid), and decylic acid.

In particular, preferred are triethylene glycol dicaproate, triethylene glycol di-2-ethylbutyrate, triethylene glycol di-n-octylate, and triethylene glycol di-2-ethylhexylate.

The polybasic organic acid ester is not particularly limited, and examples thereof include ester compounds of a polybasic organic acid (e.g., adipic acid, sebacic acid, azelaic acid) and a C4-C8 linear or branched alcohol. In particular, preferred are dibutyl sebacate, dioctyl azelate, and dibutyl carbitol adipate.

The organic ester plasticizer is not particularly limited, and examples thereof include triethylene glycol di-2-ethylbutyrate, triethylene glycol di-2-ethylhexanoate, triethylene glycol dicaprylate, triethylene glycol di-n-octanoate, and triethylene glycol di-n-heptanoate. The examples also include tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, and 1,3-propylene glycol di-2-ethylbutyrate. The examples further include 1,4-butyleneglycol di-2-ethylbutyrate, diethylene glycol di-2-ethylbutyrate, diethylene glycol di-2-ethylhexanoate, and dipropylene glycol di-2-ethylbutyrate. The examples further include triethylene glycol di-2-ethylpentanoate, tetraethylene glycol di-2-ethylbutyrate, and diethylene glycol dicapriate. The examples further include dihexyl adipate, dioctyl adipate, hexylcyclohexyl adipate, diisononyl adipate, heptylnonyl adipate, dibutyl sebacate, and oil-modified alkyd sebacate. The examples further include mixtures of a phosphate and an adipate, adipates, mixed-type adipates produced from a C4-C9 alkyl alcohol and a C4-C9 cyclic alcohol, and C6-C8 adipates such as hexyl adipate.

The organophosphate plasticizer is not particularly limited, and examples thereof include tributoxyethyl phosphate, isodecylphenyl phosphate, and triisopropyl phosphate.

For less hydrolysis, the thermochromic layer preferably further contains, as the plasticizer, triethylene glycol di-2-ethylhexanoate (3GO), triethylene glycol di-2-ethylbutyrate (3GH), tetraethylene glycol di-2-ethylhexanoate (4GO), or dihexyl adipate (DHA). The thermochromic layer more preferably contains tetraethylene glycol di-2-ethylhexanoate (4GO) or triethylene glycol di-2-ethylhexanoate (3GO). The thermochromic layer still more preferably contains triethylene glycol di-2-ethylhexanoate.

The amount of the plasticizer in the thermochromic layer is not particularly limited. The lower limit of the amount of the plasticizer relative to 100 parts by weight of the polyvinyl acetal is preferably 30 parts by weight and the upper limit thereof is preferably 90 parts by weight. With the amount of the plasticizer of 30 parts by weight or more, the melt viscosity of the interlayer film for a laminated glass is lowered to increase the deaeration properties during the production of a laminated glass using such an interlayer film for a laminated glass. With the amount of the plasticizer of 90 parts by weight or less, the interlayer film for a laminated glass has higher transparency. The lower limit of the amount of the plasticizer is more preferably 35 parts by weight and the upper limit thereof is more preferably 70 parts by weight. The upper limit is still more preferably 63 parts by weight.

With the amount of the plasticizer of 55 parts by weight or more, the thermochromic layer can have excellent sound insulation properties.

The thermochromic layer preferably contains an adhesion modifier. With an adhesion modifier, the adhesion force of the thermochromic layer to glass can be adjusted, leading to production of a laminated glass excellent in penetration resistance.

The adhesion modifier is preferably at least one selected from the group consisting of alkali metal salts, alkaline earth metal salts, and magnesium salts. Examples of the adhesion modifier include salts of potassium, sodium, magnesium, or the like.

Examples of the acid constituting the salt include organic acids such as carboxylic acid (e.g., octylic acid, hexylic acid, 2-ethylbutyric acid, butyric acid, acetic acid, formic acid) and inorganic acids such as hydrochloric acid and nitric acid.

In the case where the interlayer film for a laminated glass of the present invention is required to have heat insulation properties, the thermochromic layer may contain a heat-ray absorbing agent.

The heat-ray absorbing agent is not particularly limited as long as it can block infrared rays. Specifically, the heat-ray absorbing agent is preferably at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The thermochromic layer may optionally contain conventionally known additives such as a UV blocking agent, an antioxidant, a light stabilizer, a modified silicone oil as an adhesion modifier, a flame retardant, an antistatic agent, a damp proofing agent, a heat-ray reflecting agent, a heat-ray absorbing agent, an antiblocking agent, and a colorant prepared from a pigment or a dye.

The thickness of the thermochromic layer is not particularly limited. The lower limit of the thickness is preferably 100 µm and the upper limit thereof is preferably 1,000 µm. With the thickness of the thermochromic layer within this range, a brilliant color change can be generated. In addition, the basic quality of the resulting laminated glass, such as transparency or penetration resistance, can be ensured. The lower limit of the thickness of the thermochromic layer is more preferably 200 µm and the upper limit thereof is more preferably 800 µm.

The thermochromic layer may be stacked on only one surface or on both surfaces of the pyrogenic layer.

In the case where the thermochromic layer is stacked only on one surface of the pyrogenic layer, the pyrogenic layer preferably has a different resin layer not containing a thermochromic substance on the opposite side surface of the thermochromic layer side surface. Such a different resin layer can further improve the adhesiveness to glass.

The different resin layer may be a layer similar to the thermochromic layer, except that it does not contain a thermochromic substance. The different resin layer may be a layer similar to or not similar to the thermochromic layer.

The thermochromic layer may be stacked on the entire surface of the pyrogenic layer or partly stacked on the pyrogenic layer. In the case where the thermochromic layer is stacked on the entire surface of the pyrogenic layer, the resulting thermochromic interlayer film for a laminated glass can uniformly change the color over a significantly broad area.

The thermochromic layer is preferably stacked on the pyrogenic layer in such a manner as not to protrude from the pyrogenic layer; otherwise the color may not change uniformly. The thermochromic layer may protrude from the pyrogenic layer to the extent that the uniform change of the color is not affected. In addition, the thermochromic layer may protrude from the pyrogenic layer in a part where the color change, even if it is not uniform, is not visible from the outside.

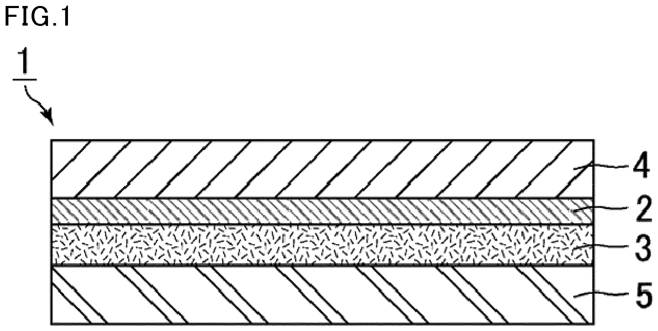

Fig. 1 shows a schematic view illustrating an exemplary cross section in the thickness direction of the interlayer film for a laminated glass of the present invention.

In Fig. 1, an interlayer film for a laminated glass 1 includes a pyrogenic layer 2 formed on a substrate 3, a first thermochromic layer 4 stacked on one surface of the pyrogenic layer 2, and a second thermochromic layer 5 stacked on the other surface of the pyrogenic layer 2.

The interlayer film for a laminated glass of the present invention may have a wedge-shaped cross section. In the case where the interlayer film for a laminated glass has a wedge-shaped cross section, adjustment of the wedge angle θ of the wedge shape according to the mounting angle of the laminated glass can prevent occurrence of double images or ghost images in a head-up display which allows the driver to see the front visual field and the meter image at the same time without turning the driver's eyes downward. For further preventing occurrence of double images, the lower limit of the wedge angle θ is preferably 0.1 mrad, more preferably 0.2 mrad, still more preferably 0.3 mrad and the upper limit is preferably 1 mrad, more preferably 0.9 mrad.

The wedge shape herein includes the shape of an interlayer film for a laminated glass having a wedge-shaped cross section produced by extrusion-molding a resin composition using an extruder. Specifically, the wedge shape may have its minimum thickness in a region slightly inward from one end on the thinner side (specifically, a region spaced inward from one end on the thinner side by a distance of 0X to 0.2X where X is the distance between the one end and the other end). The wedge shape may also have its maximum thickness in a region slightly inward from one end on the thicker side (specifically, a region spaced inward from one end on the thicker side by a distance of 0X to 0.2X where X is the distance between the one end and the other end). The wedge shape as used herein includes such a shape. The distance X between the one end and the other end of the interlayer film for a laminated glass is preferably 3 m or shorter, more preferably 2 m or shorter, particularly preferably 1.5 m or shorter and is preferably 0.5 m or longer, more preferably 0.8 m or longer, particularly preferably 1 m or longer.

In the case where the interlayer film for a laminated glass of the present invention has a wedge-shaped cross section, for example, the thickness of the pyrogenic layer is set within a certain range, while the shape(s) of the first thermochromic layer, the second thermochromic layer, and/or the different resin layer is(are) adjusted, thereby setting the interlayer film for a laminated glass to have a wedge-shaped cross section with a certain wedge angle as a whole.

The interlayer film for a laminated glass of the present invention may be produced by any method, and is preferably produced by a method including stacking the first thermochromic layer, the pyrogenic layer, and the second thermochromic layer in this order and thermally pressure-bonding the laminate. In particular, so-called roll-to-roll process is preferred in which the layers are unrolled from the rolls prepared by individually winding the layers and stacked to prepare a laminate, the laminate is passed through heated press rolls for thermal pressure-bonding of the laminate, and the obtained interlayer film for a laminated glass is wound into a roll.

In preparation of the thermochromic layer, the thermochromic substance may be directly added to the thermochromic layer or a resin layer not containing a thermochromic substance may be impregnated with a thermochromic substance by a method in which a coating liquid containing the thermochromic substance is applied to the resin layer.

The present invention also encompasses a laminated glass including the interlayer film for a laminated glass of the present invention and a pair of glass plates sandwiching the interlayer film for a laminated glass.

The glass plates may be commonly used transparent plate glass. Examples thereof include inorganic glass such as float plate glass, polished plate glass, molded plate glass, meshed glass, wired plate glass, colored plate glass, heat-absorbing glass, heat-reflecting glass, and green glass. Also usable is UV blocking glass including a UV blocking coat layer on the surface of glass. Also usable are organic plastic plates such as polyethylene terephthalate, polycarbonate, or polyacrylate plates.

As the glass plates, two or more types of glass plates may be used. Exemplary cases thereof include a laminated glass in which the interlayer film for a laminated glass of the present invention is sandwiched between a transparent float plate glass and a colored glass plate such as green glass. Moreover, as the glass plates, two or more types of glass plates different in thickness may be used.

The laminated glass of the present invention may be produced by any method, and a conventionally known method may be employed.

The present invention also encompasses a laminated glass system including the laminated glass of the present invention and a voltage supply part for applying a voltage to the pyrogenic layer of the interlayer film for a laminated glass in the laminated glass.

The laminated glass of the present invention may also be produced by a method including forming a pyrogenic layer on the surface of one glass plate and stacking the interlayer film for a laminated glass including a thermochromic layer that contains a thermoplastic resin and a thermochromic substance between the one glass plate and the other glass plate.

The present invention also encompasses a laminated glass including an interlayer film for a laminated glass including a pyrogenic layer and a thermochromic layer that contains a thermoplastic resin and a thermochromic substance, and a pair of glass plates sandwiching the interlayer film for a laminated glass.

In such a laminated glass, the interlayer film for a laminated glass is preferably stacked on at least one surface of the pyrogenic layer. Moreover, a glass plate is preferably stacked on the other surface of the pyrogenic layer opposite to the surface on which the interlayer film for a laminated glass is stacked.

The present invention also encompasses a laminated glass system including the laminated glass of the present invention and a voltage supply part for apply ng a voltage to the pyrogenic layer in the laminated glass

### - Advantageous Effects of Invention

The present invention can provide a th rmochromic interlayer film for a laminated glass capable of uniformly changing its color, a laminated glass including the thermochromic interlayer film for a laminated glass, and a laminated glass system including the laminated glass.

### BRIEF DESCRIPTION OF DRAWINGS

Fig. 1 is a schematic view illustrating an exemplary cross section in the thickness direction of the interlayer film for a laminated glass of the present invention.

### DESCRIPTION OF EMBODIMENTS

Embodiments of the present invention are more specifically described with reference to, but not limited to, the following examples.

### (Example 1)

### (1) Preparation of pyrogenic layer and the like

The substrate used was a polyethylene terephthalate (PET) film with a thickness of 50 µm.

Sputtering was performed on the substrate using titanium as a target. The sputtering was performed under the conditions of a sputtering power of 1,500 W at medium frequencies (MF), an atmospheric gas of argon gas at a gas flow rate of 225 sccm and oxygen gas at a gas flow rate of 58 sccm, and a sputtering pressure of 0.177 Pa. Thus, a metal oxide layer formed of titanium oxide (TiO₂) with a thickness of 30 nm was formed.

Next, sputtering was performed on the metal oxide layer using titanium as a target. The sputtering was performed under the conditions of a sputtering power of 1,500 W at medium frequencies (MF), an atmospheric gas of argon gas at a gas flow rate of 225 sccm and oxygen gas at a gas flow rate of 26 sccm, and a sputtering pressure of 0.170 Pa. Thus, an oxygen-deficient metal oxide layer formed of an oxygen-deficient titanium oxide (TiOₓ wherein x is less than 2) with a thickness of 4 nm was formed.

Subsequently, sputtering was performed on the oxygen-deficient metal oxide layer using silver as a target. The sputtering was performed under the conditions of a sputtering power of 1,150 W of direct current (DC), an atmospheric gas of argon at a gas flow rate of 225 sccm, and a sputtering pressure of 0.28 Pa. Thus, a silver layer formed of silver with a thickness of 16 nm was formed.

A conductive layer was formed under the same sputtering conditions for the metal oxide layer, the oxygen-deficient metal oxide layer, and the silver layer as above, except that the thickness of each layer formed by sputtering was changed. Specifically, a conductive layer formed included, on a substrate, a metal oxide layer (30 nm)/an oxygen-deficient metal oxide layer (4 nm)/a silver layer (16 nm)/an oxygen-deficient metal oxide layer (4 nm)/a metal oxide layer (80 nm)/an oxygen-deficient metal oxide layer (4 nm)/a silver layer (16 nm)/an oxygen-deficient metal oxide layer (4 nm)/a metal oxide layer (30 nm) in this order.

The obtained conductive layer had a surface resistivity of 1.5 Ω/□.

### (2) Preparation of thermochromic layer 1

To 100 parts by weight of polyvinyl butyral were added 0.5 parts by weight of an orange thermochromic ink, 40 parts by weight of a plasticizer, 0.5 parts by weight of a UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The thermochromic ink used was an orange thermochromic ink extracted from a FRIXION light highlighter ("SFL-10SL-0" available from Pilot Corporation). The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT).

The obtained composition was extruded from an extruder to provide a single-layer thermochromic layer 1 with a thickness of 380 µm.

The obtained thermochromic layer 1 was orange at room temperature (25°C).

### (3) Production of interlayer film for laminated glass and laminated glass

A substrate having a conductive layer formed thereon was sandwiched between two sheets of the obtained thermochromic layers 1, and the laminate was thermally pressure-bonded. Thus, an interlayer film for a laminated glass having a laminated structure (a thermochromic layer 1/a conductive layer/a substrate/a thermochromic layer 1) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

Two transparent clear glass plates (1,000 mm in length × 300 mm in width × 1.8 mm in thickness) were prepared. To one of the two transparent clear glass plates were attached one-sided copper foil tapes (STS-CU42S available from Sekisui Techno Trading West Japan Co., Ltd.) on both 1000-mm sides as electrodes. The copper foil tapes were attached in a manner as to partly protrude from the glass plate for connection to a power source. Next, the interlayer film for a laminated glass was cut to a size of 1,000 mm in length × 300 mm in width. Edges having a width of about 15 mm on both 1,000-mm sides of the thermochromic layer 1 on the conductive layer side were cut off so that the copper foil tapes attached to the glass and the surface of the conductive layer on the side opposite to the substrate side were in contact with each other during the production of a laminated glass.

The resulting interlayer film for a laminated glass was stacked to provide a laminate including a clear glass plate with copper foil tapes attached thereto/a thermochromic layer 1/a conductive layer/a substrate/a thermochromic layer 1/a clear glass plate with no copper foil tape attached thereto stacked in this order. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Example 2)

### (1) Preparation of thermochromic layer 2

To 100 parts by weight of polyvinyl butyral were added 0.5 parts by weight of a blue thermochromic ink, 40 parts by weight of a plasticizer, 0.5 parts by weight of UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The thermochromic ink used was blue-black (hereafter, also abbreviated as BB) thermochromic ink extracted from a FRIXION BALL KNOCK ballpoint pen ("LFBK-23EF-BB" available from Pilot Corporation). The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT).

The obtained composition was extruded from an extruder to provide a single-layer thermochromic layer 2 with a thickness of 380 µm.

The obtained thermochromic layer 2 was blue at room temperature (25°C).

### (2) Preparation of protective layer 3

To 100 parts by weight of polyvinyl butyral were added 40 parts by weight of a plasticizer, 0.5 parts by weight of a UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT).

The obtained composition was extruded from an extruder to provide a single-layer protective layer 3 with a thickness of 380 µm.

### (3) Production of interlayer film for laminated glass and laminated glass

A substrate having a conductive layer formed thereon as in Example 1 was sandwiched between the obtained thermochromic layer 2 and the protective layer 3, and the laminate was thermally pressure-bonded. Thus, an interlayer film for a laminated glass having a laminated structure (a thermochromic layer 2/a conductive layer/a substrate/a protective layer 3) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

A laminated glass was produced as in Example 1, except that both sides of the thermochromic layer 2, instead of the thermochromic layer 1 on the conductive layer side in Example 1, were cut off.

### (Example 3)

### (1) Preparation of thermochromic layer 4

To 100 parts by weight of polyvinyl butyral were added 0.5 parts by weight of a green thermochromic ink, 40 parts by weight of a plasticizer, 0.5 parts by weight of UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The thermochromic ink used was a green thermochromic ink extracted from a FRIXION BALL KNOCK ballpoint pen ("LFBK-23EF-BB" available from Pilot Corporation). The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT).

The obtained composition was extruded from an extruder to provide a single-layer thermochromic layer 4 with a thickness of 380 µm.

The obtained thermochromic layer 4 was green at room temperature (25°C).

### (2) Production of interlayer film for laminated glass and laminated glass

A substrate having a conductive layer formed thereon as in Example 1 was sandwiched between the protective layer 3 obtained as in Example 2 and the obtained thermochromic layer 4, and the laminate was thermally pressure-bonded. Thus, an interlayer film for a laminated glass having a laminated structure (a protective layer 3/a conductive layer/a substrate/a thermochromic layer 4) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

A laminated glass was produced as in Example 1, except that both sides of the protective layer 3, instead of the thermochromic layer 1 on the conductive layer side in Example 1, were cut off.

### (Example 4)

### (1) Preparation of thermochromic layer 5

To 100 parts by weight of polyvinyl butyral were added 0.5 parts by weight of a yellow thermochromic ink, 40 parts by weight of a plasticizer, 0.5 parts by weight of a UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The thermochromic ink used was a yellow thermochromic ink extracted from a FRIXION light highlighter ("SFL-10SL-Y" available from Pilot Corporation). The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT). The obtained composition was extruded from an extruder to provide a single-layer thermochromic layer 5 with a thickness of 380 µm.

The obtained thermochromic layer 5 was yellow at room temperature (25°C).

### (2) Production of interlayer film for laminated glass and laminated glass

A substrate having a conductive layer formed thereon was sandwiched between two sheets of the obtained thermochromic layers 5, and the laminate was thermally pressure-bonded. Thus, an interlayer film for a laminated glass having a laminated structure (a thermochromic layer 5/a conductive layer/a substrate/a thermochromic layer 5) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

A laminated glass was produced as in Example 1, except that both sides of the thermochromic layer 5 on the conductive layer side, instead of the thermochromic layer 1 on the conductive layer side, were cut off.

### (Example 5)

### (1) Preparation of pyrogenic layer or the like

A substrate used was a polyethylene terephthalate (PET) film with a thickness of 50 µm. Sputtering was performed on the substrate using copper as a target to form a copper layer with a thickness of 2 µm. Etching treatment was performed on the formed copper layer, thereby forming a conductive layer patterned with copper lines (width: 10 µm) at intervals of 2.5 mm in a grid shape.

### (2) Production of interlayer film for laminated glass and laminated glass

A substrate having a conductive layer formed thereon was sandwiched between two sheets of thermochromic layers 1 prepared as in Example 1, and the laminate was thermally pressure-bonded. Thus, an interlayer film for a laminated glass having a laminated structure (a thermochromic layer 1/a conductive layer/a substrate/a thermochromic layer 1) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

Two transparent clear glass plates (1,000 mm in length × 300 mm in width × 1.8 mm in thickness) were prepared. To one of the two transparent clear glass plates were attached one-sided copper foil tapes (STS-CU42S available from Sekisui Techno Trading West Japan Co., Ltd.) on both 1000-mm sides as electrodes. The copper foil tapes were attached in a manner as to partly protrude from the glass plate for connection to a power source. Next, the interlayer film for a laminated glass was cut to a size of 1,000 mm in length × 300 mm in width. Edges having a width of about 15 mm on both 1,000-mm sides of the thermochromic layer 1 on the conductive layer side were cut off so that the copper foil tapes attached to the glass and the surface of the conductive layer on the side opposite to the substrate side were in contact with each other during the production of a laminated glass.

The resulting interlayer film for a laminated glass was stacked to provide a laminate including a clear glass plate with copper foil tapes attached thereto/a thermochromic layer 1/a conductive layer/a substrate/a thermochromic layer 1/a clear glass plate with no copper foil tape attached thereto stacked in this order. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Example 6)

### (1) Preparation of pyrogenic layer

One thermochromic layer 1 was prepared as in Example 1, and cut to a size of 1,000 mm in length × 300 mm in width. Thus, an interlayer film for a laminated glass was obtained. To the entire surface of the interlayer film for a laminated glass were thermally pressure-bonded tungsten wires (width: 30 µm, thickness: 30 µm) in parallel to each other at intervals of 2.5 mm as a conductive layer.

### (2) Production of an interlayer film for laminated glass and laminated glass

Two transparent clear glass plates (1,000 mm in length × 300 mm in width × 1.8 mm in thickness) were prepared. The glass plates and the interlayer film for a laminated glass with tungsten wires attached thereto were stacked to provide a laminate including a clear glass plate/tungsten wires/a thermochromic layer 1/a clear glass plate stacked in this order. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Example 7)

### (1) Preparation of pyrogenic layer

One transparent clear glass plate (1,000 mm in length × 300 mm in width × 1.8 mm in thickness) was prepared. Sputtering was performed on the clear glass plate using titanium as a target. The sputtering was performed under the conditions of a sputtering power of 1,500 W at medium frequencies (MF), an atmospheric gas of argon gas at a gas flow rate of 225 sccm and oxygen gas at a gas flow rate of 58 sccm, and a sputtering pressure of 0.177 Pa. Thus, a metal oxide layer formed of titanium oxide (TiO₂) with a thickness of 25 nm was formed.

Subsequently, sputtering was performed on the metal oxide using zinc oxide as a target. The sputtering was performed under the conditions of a sputtering power of 1,500 W at medium frequencies (MF), an atmospheric gas of argon gas at a gas flow rate of 240 sccm and oxygen gas at a gas flow rate of 50 sccm, and a sputtering pressure of 0.170 Pa. Thus, an oxygen-deficient metal oxide layer formed of zinc oxide (ZnOx) with a thickness of 4 nm was formed.

Subsequently, sputtering was performed on the oxygen-deficient metal oxide layer using silver as a target. The sputtering was performed under the conditions of a sputtering power of 1,150 W of direct current (DC), an atmospheric gas of argon at a gas flow rate of 225 sccm, and a sputtering pressure of 0.28 Pa. Thus, a silver layer formed of silver with a thickness of 16 nm was formed.

A conductive layer was formed under the same sputtering conditions for the metal oxide layer, the oxygen-deficient metal oxide layer, and the silver layer as above, except that the thickness of each layer formed by sputtering was changed. Specifically, a conductive layer formed included, on a substrate, a metal oxide layer (25 nm)/an oxygen-deficient metal oxide layer (4 nm)/a silver layer (16 nm)/an oxygen-deficient metal oxide layer (4 nm)/a metal oxide layer (55 nm)/an oxygen-deficient metal oxide layer (4 nm)/a silver layer (16 nm)/an oxygen-deficient metal oxide layer (4 nm)/a metal oxide layer (25 nm) in this order.

The obtained conductive layer had a surface resistivity of 1.0 Ω/□.

### (2) Production of interlayer film for laminated glass and laminated glass

One thermochromic layer 1 was prepared as in Example 1 as an interlayer film for a laminated glass. Separately, one transparent clear glass plate (1,000 mm in length × 300 mm in width × 1.8 mm in thickness) was prepared. The clear glass plate having a conductive layer formed thereon, the interlayer film for a laminated glass, and the clear glass plate were stacked to provide a laminate including a clear glass plate/a conductive layer/a thermochromic layer 1/a clear glass plate stacked in this order. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Comparative Example 1)

A polyethylene terephthalate (PET) film with a thickness of 50 µm as a substrate was sandwiched between two thermochromic layers 1 obtained as in Example 1, and the laminate was thermally pressure-bonded. Thus an interlayer film for a laminated glass having a laminated structure (a thermochromic layer 1/a substrate/a thermochromic layer 1) was produced. The thermal pressure-bonding was performed by the roll-to-roll process using a thermal pressure bonding laminator ("MRK-650Y type" available from MCK Co., Ltd.) under the conditions of a heating temperature of 75°C, a pressure for the pressure bonding of 1.0 kN, and a tension during conveyance of 20 N. The upper and lower lamination rolls used for the thermal pressure bonding were both made of rubber.

The obtained interlayer film for a laminated glass was sandwiched between two transparent clear glass plates (1,000 mm in length × 300 mm in width × 1.8 mm in thickness), thereby providing a laminate. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Comparative Example 2)

### (1) Preparation of thermochromic layer 6

To 100 parts by weight of polyvinyl butyral were added 0.5 parts by weight of a blue-black thermochromic ink, 40 parts by weight of a plasticizer, 0.5 parts by weight of a UV blocking agent, and 0.5 parts by weight of an antioxidant. They were sufficiently kneaded using a mixing roll to prepare a composition.

The polyvinyl butyral used had a hydroxy group content of 30 mol%, a degree of acetylation of 1 mol%, a degree of butyralization of 69 mol%, and an average degree of polymerization of 1,700. The thermochromic ink used was a blue-black thermochromic ink extracted from a FRIXION BALL KNOCK ballpoint pen ("LFBK-23EF-BB" available from Pilot Corporation). The plasticizer used was triethylene glycol di-2-ethylhexanoate (3GO). The UV blocking agent used was 2-(2'-hydroxy-3'-t-butyl-5-methylphenyl)-5-chlorobenzotriazole ("Tinuvin326" available from BASF SE). The antioxidant used was 2,6-di-t-butyl-p-cresol (BHT).

The obtained composition was extruded from an extruder to provide a single-layer thermochromic layer 6 with a thickness of 760 µm.

The obtained thermochromic layer 6 was blue at room temperature (25°C).

### (2) Production of laminated glass

The obtained thermochromic layer 6 alone was used as an interlayer film for a laminated glass and sandwiched between two transparent clear glass plates (1,000 mm in length × 300 mm in width × 1.8 mm in thickness), thereby providing a laminate. The obtained laminate was preliminarily pressure-bonded using heating rolls at 230°C. Then, the preliminarily pressure-bonded laminate was further pressure-bonded by the heating roll method using an autoclave under the conditions of 135°C and a pressure of 1.2 MPa for 20 minutes. Thus, a laminated glass was produced.

### (Evaluation)

The laminated glasses obtained in the examples and comparative examples were evaluated by the following methods.

Tables 1 and 2 show the results.

### (1) Evaluation of visible light transmittance

The visible light transmittance of the obtained laminated glass was measured by a method in conformity with JIS R 3208 using a spectrophotometer ("U-4100" available from Hitachi High-Technologies Corporation). The measurement was performed at a part where the copper foil tape was not attached.

### (2) Evaluation of color change

The electrodes protruding from the laminated glass were connected to a DC12V/4.2A power source "S8JX-N05012DC (Omron Corporation) using alligator cables. In the case of the laminated glasses of Examples 6 and 7, connection was established by contacting the tungsten wire or conductive layer with alligator cables.

A voltage of 12 V was applied to the laminated glass in an atmosphere of 25°C, and the color change (color development) was visually evaluated. Then, the voltage was turned off and the laminated glass was cooled in an atmosphere of -10°C, and the color change (color fade) was visually evaluated. In this evaluation, the temperature of -10°C was maintained until the color change was not any more observed. As a result, in the laminated glasses of Examples 1 to 4, the color change was observed over the entire surface.

In this evaluation, a contact thermometer was used to measure the temperature at the central portion of the laminated glass surface, and the color development starting temperature and the color fade starting temperature were obtained.

The laminated glasses of Comparative Examples 1 and 2 had no pyrogenic layer. The evaluation of these laminated glasses was performed by warming the environmental temperature using an air conditioner. As a result, in the laminated glasses of Comparative Examples 1 and 2, the color change was observed only locally and the change over the entire surface of the laminated glass was not observed.

Even in the case where the microcapsule pigment disclosed in Patent Literature 1 (JP 2013-159706 A) is used instead of the thermochromic ink used in the examples of the present application, it is considered that a thermochromic interlayer film for a laminated glass capable of changing its color uniformly can be produced. It is also considered that a laminated glass produced using the thermochromic interlayer film for a laminated glass and a laminated glass system including the laminated glass can be produced. The microcapsule pigment disclosed in Patent Literature 1 includes the following four components (a) to (d) :
(a) an electron donative colorational organic compound;
(b) an electron acceptive compound (specific hydroxybenzoate compound);
(c) a reaction medium (reaction medium that reversibly induces an electron transfer reaction between the components (a) and (b)); and
(d) an additive (compound having a melting point of 50°C or higher selected from alcohols, esters, ethers, ketones, and acid amides).

**[Table 1]**

| | | | Example 1 | Example 2 | Example 3 | Example 4 | Example 5 |
|---|---|---|---|---|---|---|---|
| Layer structure of laminated glass | | Glass | Clear glass (1.8 mm in thickness) | | | | |
| | | Thermochromic layer | Thermochromic layer 1 | Thermochromic layer 2 | Protective layer 3 | Thermochromic layer 5 | Thermochromic layer 1 |
| | | | (Orange thermochromic ink) | (Blue-black thermochromic ink) | - | (Yellow thermochromic ink) | (Orange thermochromic ink) |
| | | Pyrogenic layer | Conductive layer (including pyrogenic layer, metal oxide layer, and oxygen-deficient metal oxide layer) | | | | Patterned with copper lines |
| | | PET substrate | PET film (50 µm in thickness) | | | | |
| | | Thermochromic layer | Thermochromic layer 1 | Protective layer 3 | Thermochromic layer 4 | Thermochromic layer 5 | Thermochromic layer 1 |
| | | | (Orange thermochromic ink) | - | (Green thermochromic ink) | (Yell ow thermochromic ink) | (Orange thermochromic ink) |
| | | Glass | Clear glass (1.8 mm in thickness) | | | | |
| Evaluation | Visible light transmittance (%) | | 80 | 85 | 85 | 80 | 85 |
| | Color change | Change | Orange ⇔ Colorless | Blue ⇔ Color less | Green ⇔ Colorless | Yellow ⇔ Colorless | Orange ⇔ Colorless |
| | | Color development starting temperature (°C) | 35 | 40 | 40 | 35 | 35 |
| | | Color fade starting temp. (°C) | 5 | 10 | 10 | 5 | 5 |

**[Table 2]**

| | | | Example 6 | Example 7 | Comp. Example 1 | Comparative Example 2 |
|---|---|---|---|---|---|---|
| Layer structure of laminated glass | | Glass | Clear glass (1.8 mm in thickness) | | | |
| | | Thermochromic layer | Thermochromic layer 1 | Thermochromic layer 1 | Thermochromic layer 1 | Thermochromic layer 6 |
| | | | (Orange thermochromic ink) | (Orange thermochromic ink) | (Orange thermochromic ink) | (Blue-black thermochromic ink) |
| | | Pyrogenic layer | Tungsten wire | Conductive layer (including pyrogenic layer, metal oxide layer, and oxygen-deficient metal oxide layer) | - | - |
| | | PET substrate | - | - | - | - |
| | | Thermochromic layer | - | - | Thermochromlc layer 1 | - |
| | | | - | - | (Orange thermochromic ink) | |
| | | Glass | Clear glass (1.8 mm in thickness) | | | |
| Evaluation | Visible light transmittance (%) | | 85 | 85 | 80 | 80 |
| | Color change | Change | Orange ⇔ Colorless | Orange ⇔ Colorless | (Color developed locally) | (Color developed locally) |
| | | Color development starting temp. (°C) | 35 | 35 | 35 | 40 |
| | | Color fade starting temperature (°C) | 5 | 5 | 5 | 10 |

### INDUSTRIAL APPLICABILITY

The present invention can provide a thermochromic interlayer film for a laminated glass capable of uniformly changing its color, a laminated glass produced using the thermochromic interlayer film for a laminated glass, and a laminated glass system including the laminated glass.

### REFERENCE SIGNS LIST

- 1: interlayer film for a laminated glass
- 2: pyrogenic layer
- 3: substrate
- 4: first thermochromic layer
- 5: second thermochromic layer

## Claims

1. A thermochromic interlayer film for a laminated glass comprising:
a pyrogenic layer; and
a thermochromic layer that contains a thermoplastic resin and a thermochromic substance, stacked on at least one surface of the pyrogenic layer.

2. The thermochromic interlayer film for a laminated glass according to claim 1,
wherein the pyrogenic layer has a surface resistivity of 10 Ω/□ or lower.

3. The thermochromic interlayer film for a laminated glass according to claim 1 or 2,
wherein the thermochromic substance is a dye or a pigment that repeats color development and fade by heating and cooling.

4. The thermochromic interlayer film for a laminated glass according to claim 1, 2, or 3,
wherein the thermochromic substance is a dye or a pigment that starts changing its color by heating at a temperature of 20°C to 70°C.

5. The thermochromic interlayer film for a laminated glass according to claim 1, 2, 3, or 4,
wherein the thermoplastic resin is a polyvinyl acetal.

6. A laminated glass comprising:
the interlayer film for a laminated glass according to claim 1, 2, 3, 4, or 5; and
a pair of glass plates sandwiching the interlayer film for a laminated glass.

7. A laminated glass system comprising:
the laminated glass according to claim 6; and
a voltage supply part for applying a voltage to the pyrogenic layer in the thermochromic interlayer film for a laminated glass in the laminated glass.

8. A laminated glass comprising:
a pyrogenic layer;
an interlayer film for a laminated glass comprising a thermochromic layer that contains a thermoplastic resin and a thermochromic substance; and
a pair of glass plates sandwiching the pyrogenic layer and the interlayer film for a laminated glass.

9. The laminated glass according to claim 8,
wherein the interlayer film for a laminated glass is stacked at least on one surface of the pyrogenic layer.

10. The laminated glass according to claim 9, wherein one of the glass plates is stacked on the other surface of the pyrogenic layer opposite to the surface on which the interlayer film for a laminated glass is stacked.

11. A laminated glass system comprising:
the laminated glass according to claim 8, 9, or 10; and
a voltage supply part for applying a voltage to the pyrogenic layer in the laminated glass.
